# EUROPÄISCHE PATENTSCHRIFT

(11) **EP 1 908 659 B1**
(45) Veröffentlichungstag und Bekanntmachung des Hinweises auf die Patenterteilung: **17.06.2020**
(21) Anmeldenummer: 07016149.2
(22) Anmeldetag: 17.08.2007
(51) Int. Cl.: B60T 11/22, B60T 11/30, B62L 3/02, B60T 17/22

(54) **Bremssystem mit einer hydraulischen Bremsanlage**
Braking system with a hydraulic braking system
Système de freinage doté d'une installation de freinage hydraulique

(30) Priorität: 29.08.2006 DE 102006040328
(43) Veröffentlichungstag der Anmeldung: 09.04.2008
(73) Patentinhaber: Gustav Magenwirth GmbH & Co. KG, 72574 Bad Urach (DE)
(72) Erfinder: Ruckh, Stefan, 72587 Römerstein/Zainingen (DE); Beier, Jürgen, 89081 Ulm (DE)
(74) Vertreter: Friese Goeden Patentanwälte PartGmbB

(56) Entgegenhaltungen:
- EP-A1- 1 314 625
- WO-A1-99/55567
- DE-T2- 60 018 120
- DE-T2- 69 016 953
- US-A- 2 524 544
- US-A- 4 542 624
- US-A- 4 785 629
- US-A- 6 003 639
- US-A1- 2004 118 641
- US-A1- 2005 199 450

## Beschreibung

Die Erfindung bezieht sich auf ein Bremssystem für Fahrräder, mit einer hydraulischen Bremsanlage, mit einer Befüllvorrichtung für die Bremsanlage, wobei die Bremsanlage ein mit Hydraulikflüssigkeit gefülltes Gebersystem und eine hydraulisch damit verbundene Bremsvorrichtung aufweist, wobei das Bremssystem einen Ausgleichsbehälter und eine Befüll- und Entlüftungsöffnung aufweist, die zum lösbaren Anschließen eines Entlüftungs- und Befüllwerkzeugs mit einer Kolben-Zylinderanordnung ausgebildet ist.

Bei Montage- oder Wartungsarbeiten an hydraulischen Bremsanlagen ist auch das Entleeren, Befüllen und Entlüften des Hydrauliksystem erforderlich.
Das Hydrauliksystem kann dazu im Bereich der am Rad befindlichen Bremsvorrichtung, insbesondere am Bremssattel eine verschließbare Öffnung aufweisen sowie am Gebersystem die Befüll- und Entlüftungsöffnung des Ausgleichsbehälters. Die Bremsflüssigkeit wird durch die Öffnung am Bremssattel (Bremssattelventil) unter Druck eingefüllt, bis oben im Ausgleichsbehälter bei abgenommenem Ausgleichsbehälter-Deckel oder an der Befüll- und Entlüftungsöffnung blasenfrei Bremsflüssigkeit austritt.

Da beim Umgang mit Bremsflüssigkeit wegen deren Aggressivität höchste Vorsicht geboten ist, muss dafür gesorgt werden, dass beim Befüllen und Belüften keine Bremsflüssigkeit austritt und an Fahrzeugteilen Beschädigungen hervorruft oder diese unbrauchbar macht. Auch ein Hautkontakt sollte sicher vermieden werden. Aus den vorgenannten Gründen wird für den Umgang mit Bremsflüssigkeit beim Befüllen und Entlüften eine vergleichsweise umfangreiche, umständlich zu handhabende Ausrüstung eingesetzt, die einem ungeübten Benutzer Probleme bereiten kann.
Die einzufüllende Bremsflüssigkeit wird üblicherweise aus luftdicht verschlossenen Behältern in eine Kunststoffflasche umgefüllt, die dann über einen Schlauch mit dem Bremssattelventil verbunden wird. An die Befüll- und Entlüftungsöffnung des Gebersystems wird über einen Schlauch ein Auffangbehälter angeschlossen zum Auffangen von austretender Bremsflüssigkeit.
Durch Zusammendrücken der Kunststoffflasche wird die Bremsflüssigkeit durch das Hydrauliksystem gedrückt, bis es oben im Ausgleichsbehälter oder an der Befüll- und Entlüftungsöffnung blasenfrei austritt. Die Kunststoffflasche muss dabei mehrmals zusammengedrückt und wieder zurückverformt werden, bis keine Luftblasen aus dem Bremssattel kommen.
Insgesamt ist das Befüllen und Entlüften des Hydrauliksystem aufwendig bezüglich der Handhabung, insbesondere für Laien und auch hinsichtlich der erforderlichen Ausrüstung, wobei teilweise Provisorien als Hilfsmittel eingesetzt werden, um die verwendeten Behältnisse zu halten. Außerdem besteht erhöht die Gefahr, dass bei der Handhabung Hydraulikflüssigkeit verschüttet wird oder austritt und dass dabei Beschädigungen und/oder Verletzungen auftreten können.

Eine solche hydraulische Bremsanlage ist beispielsweise aus der US-A 4,785,629 bekannt. Dazu ist an jedem Nehmerzylinder eine Befüll- und Entlüftungsöffnung in Form eines dicht verschließbaren Anschlussnippels angeordnet, an den ein Schlauch anschließbar ist. Der Schlauch ist weiterhin mit einem Entlüftungs- und Befüllwerkzeug verbindbar, durch das Hydraulikflüssigkeit in das Bremssystem drückbar ist. Die Anschlussnippel sind jeweils an der Unterseite der Nehmerzylinder, an der tiefsten Stelle des Bremssystems, angeordnet. Der Vorteil dabei ist, dass Luftblasen im hydraulischen Bremssystem nach oben bis in den Geberzylinder aufsteigen und sich dort in einem Luftraum im Ausgleichsbehälter ansammeln und an die Umgebungsluft abgegeben werden. Als Entlüftungs- und Befüllwerkzeug ist eine Kolben-Zylinderanordnung in Form einer Spritze vorgesehen. Damit beim Befüllen keine Hydraulikflüssigkeit austritt, weist der Ausgleichsbehälter ein großes Flüssigkeitsreservoir und einen großen Luftraum auf, in den die Luft austreten kann.

Diese Anordnung benötigt jedoch viel Bauraum, der bei einem Fahrrad nicht zur Verfügung steht.

Dokument US 2004/0118641 A1 offenbart ein Bremssystem gemäß dem Oberbegriff des Anspruchs 1.

Aufgabe der vorliegenden Erfindung ist es, bei einem Bremssystem der eingangs genannten Art das Befüllen und Entlüften des Hydrauliksystem zu vereinfachen und sicherer zu gestalten, so dass eine einfache und unter Vermeidung von Verunreinigung der Umgebung mit Hydraulikflüssigkeit - sabberfreie - Befüllung und Entlüftung des Bremssystems möglich ist.

Zur Lösung dieser Aufgabe wird ein Bremssystem gemäß Anspruch 1 vorgeschlagen.

Mit einem solchen, eine Kolben-Zylinderanordnung aufweisenden Werkzeug ist eine besonders gute Dosierbarkeit der einzufüllenden Hydraulikflüssigkeit gegeben. Dies ist in Anbetracht der geringen Füllmenge bei hydraulischen Bremsanlagen für Fahrräder von besonderer Bedeutung. Außerdem kann damit sowohl Druck als auch ein vergleichsweise hoher Unterdruck erzeugt werden, durch den außer einer spülenden auch eine saugende Befüllung des Hydrauliksystems möglich ist. Das Entlüftungs- und Befüllwerkzeug kann somit oben an der Befüll- und Entlüftungsöffnung des Gebersystems dicht angeschlossen werden und durch Ansaugen mit dessen Kolben-Zylinderanordnung wird dann Hydraulikflüssigkeit vom unteren Ende des Hydrauliksystems angesaugt, bis oben blasenfreie Hydraulikflüssigkeit austritt.

Vorzugsweise ist die lösbare Verbindung zwischen dem Entlüftungs- und Befüllwerkzeug und der Befüll- und Entlüftungsöffnung des Gebersystems durch dichtendes Einstecken gebildet.

Durch das dichtende Einstecken des Entlüftungs- und Befüllwerkzeugs kann im wesentlichen ohne weitere Hilfsmittel ein Befüllen und/oder Entlüften des Hydrauliksystems vorgenommen werden.

Die Befüll- und Entlüftungsöffnung des Gebersystems ist zweckmäßigerweise oberseitig an diesem und insbesondere in einem Deckel des Ausgleichsbehälters angeordnet.
Die Befüll- und Entlüftungsöffnung befindet sich somit an der Oberseite des Gebersystems, wodurch eine für das Befüllen und Entlüften günstige Position gegeben ist.
Die Orientierungsrichtung der Befüll- und Entlüftungsöffnung ist dabei insbesondere im wesentlichen vertikal oder etwas schräg ausgerichtet, so dass das Entlüftungs- und Befüllwerkzeug von oben eingesteckt werden kann.

Zeckmäßigerweise hat das Entlüftungs- und Befüllwerkzeug einen Anschlussstutzen oder dergleichen Anschlusselement zum dichtenden Einstecken in die Befüll- und Entlüftungsöffnung (en) .
Das Entlüftungs- und Befüllwerkzeug kann mit seinem Anschlussstutzen direkt in die Befüll- und Entlüftungsöffnung eingesteckt werden und ist dann in etwa vertikaler oder etwas schräger Lage gehalten. Zusätzliche Hilfsmittel zum Halten sind nicht erforderlich.
Insbesondere durch eine Konusverbindung zwischen Anschlussstutzen und Befüll- und Entlüftungsöffnung ist alleine durch das Einstecken eine dichte und sichere Verbindung vorhanden, die druck- und vakuumdicht ist und mit zu einer einfachen und sauberen Handhabbarkeit beim Befüll- und Belüftungsvorgang beiträgt.
Besonders zweckmäßig ist es, wenn der Anschlussstutzen des Entlüftungs- und Befüllwerkzeugs einen Luerkonus oder einen Luer-Lock aufweist und wenn die Befüll- und Entlüftungsöffnung des Ausgleichsbehälters passend zu dem Anschlussstutzen ausgebildet ist. Sowohl der Luerkonus zum Einstecken als auch der Luer-Lock zum Eindrehen bilden bewährte, einfach zu handhabende, dichte und sichere Verbindungen.

Bei Einsatz eines Luerkonus oder Luer-Lock als Konusverbindung kann in besonders vorteilhafter Weise als Entlüftungs- und Befüllwerkzeug eine handelsübliche Spritze verwendet werden, die praktisch überall erhältlich und kostengünstig ist und deren gängiges Füllvolumen von beispielsweise 10 ml oder 20 ml für eine vollständige Befüllung und/oder Entlüftung eines Hydrauliksystems insbesondere für Fahrräder ausreicht, ohne dass sie mehrfach an- und abgesetzt werden muss.

Vorzugsweise weist auch die Bremsvorrichtung eine Befüll- und Entlüftungsöffnung auf, die zum lösbaren Anschließen des Entlüftungs- und Befüllwerkzeugs durch vorzugsweise dichtendes Einstecken ausgebildet ist. Dabei ist auch hier die Befüll- und Entlüftungsöffnung der Bremsvorrichtung passend zu dem Anschlussstutzen des insbesondere durch eine Spritze gebildeten Entlüftungs- und Befüllwerkzeugs ausgebildet.
Für einen Befüll- und Entlüftungsvorgang kann bei der Bremsvorrichtung eine mit Hydraulikflüssigkeit gefüllte Spritze oder ein anderer Behälter mit Hydraulikflüssigkeit angeschlossen werden, während eine leere Spritze zum Ansaugen an der Befüll- und Entlüftungsöffnung dicht angedockt wird. Durch Aufziehen der oberen leeren Spritze wird die Hydraulikflüssigkeit durch das Hydrauliksystem gesaugt, wobei gegebenenfalls unterstützend durch gleichzeitiges Drücken der unteren gefüllten Spritze ein schnelles Befüllen und Entlüften möglich ist.

Das Entlüftungs- und Befüllwerkzeug kann auch in das Gebersystem integriert, also Teil des Gebersystems sein. Es kann dabei permanent an den Ausgleichsbehälter angeschlossen sein oder aber in einer Halterung gehalten und für den Befüll- und Entlüftungsvorgang entnehmbar oder abnehmbar und an die Befüll- und Entlüftungsöffnung dicht anschließbar sein.

Nach einer Ausgestaltung der Erfindung kann zumindest die Befüll- und Entlüftungsöffnung des Gebersystems in einem Ausgleichsbehälterdeckel einen Einsteckabschnitt zur dichten Aufnahme des Anschlussstutzens des Entlüftungs- und Befüllwerkzeugs aufweisen, wobei sich an den Einsteckabschnitt in Einsteckrichtung eine vorzugsweise napfförmig ausgebildete Anschlusskammer im Gebergehäuse anschließt, in die ein Teil des Anschlussstutzens hineinragt und die wenigstens eine Verbindung zum Ausgleichsbehälter hat.

Die Befüll- und Entlüftungsöffnung ist an der Oberseite des Gebersystems angeordnet und somit an einer für das Befüllen und Entlüften günstigen Position. Der Einsteckabschnitt im Deckel und die napfförmige Anschlusskammer im Gebergehäuse fluchten miteinander und sind zweckmäßigerweise in Entformungsrichtung eines Formwerkzeugs zur Herstellung dieser Teile orientiert, so dass eine einfache Herstellung möglich ist.
In dem Einsteckabschnitt im Deckel wird das Entlüftungs- und Befüllwerkzeug oder dessen Anschlussstutzen nach dem Einstecken sicher gehalten und über die Anschlusskammer und die Überströmöffnung ist auf einfache Weise eine Strömungsverbindung zum Ausgleichsbehälter vorhanden.
Durch die sichere Halterung des Entlüftungs- und Befüllwerkzeugs wird beim Entleeren, Befüllen und Entlüften des Hydrauliksystem erreicht, dass keine Bremsflüssigkeit beziehungsweise Hydraulikflüssigkeit austritt und an Fahrzeugteilen Beschädigungen hervorruft oder diese unbrauchbar macht. Auch wird so ein Hautkontakt mit Hydraulikflüssigkeit sicher vermieden. Aus den vorgenannten Gründen wird bisher für den Umgang mit Bremsflüssigkeit beim Befüllen und Entlüften eine vergleichsweise umfangreiche, umständlich zu handhabende Ausrüstung eingesetzt, die einem ungeübten Benutzer Probleme bereiten kann.

Die Anschlusskammer hat zweckmäßigerweise eine seitliche Begrenzungswand zum Ausgleichsbehälter, in der wenigstens eine oben randoffene Überströmöffnung als Verbindung zum Ausgleichsbehälter vorgesehen ist.
Auch diese randoffene Überströmöffnung, die ebenfalls wie der Einsteckabschnitt und die Anschlusskammer in Entformungsrichtung eines Formwerkzeugs orientiert ist, trägt mit zu einem einfachen Aufbau des Formwerkzeugs und zu einer vereinfachten Herstellung bei.

Eine vorteilhafte Ausgestaltung sieht vor, dass die Anschlusskammer lichte Innenabmessungen hat, die größer sind als das hineinragende Teil des Anschlussstutzens und dass die randoffene Überströmöffnung in der Begrenzungswand der Anschlusskammer in Betriebsposition des Gebersystems in einem der höchsten Stelle der seitlichen Begrenzungswand beabstandeten Bereich angeordnet ist.
Durch diese Dimensionierung der Anschlusskammer ist um den Anschlussstutzen herum genügend Platz für ein Umströmen des Fluids (Hydraulikflüssigkeit, Luft) vorhanden, so dass dieses über die Überströmöffnung zur Anschlusskammer und umgekehrt gelangen kann.
Durch die spezielle Lage der randoffenen Überströmöffnung bildet die Anschlusskammer eine Luftfalle für in der Hydraulikflüssigkeit befindliche Luftbläschen. Diese bleiben durch die tiefere Anordnung der Überströmöffnung in Relation zu der höchsten Stelle des Innenraums beziehungsweise von deren Begrenzungswand in der Anschlusskammer gefangen und können nicht in den Ausgleichsbehälter und den weiteren Hydraulikkreislauf gelangen.

Nach einer Ausführungsform können zwei vorzugsweise etwa gegenüberliegend angeordnete, randoffene Überströmöffnungen in der Begrenzungswand vorgesehen sein. Diese sind dann zweckmäßigerweise jeweils zur höchsten Stelle des Innenraums der Anschlusskammer um etwa 90° oder mehr versetzt positioniert.
Nach einer vorteilhaften Weiterbildung der Erfindung ist die in der Begrenzungswand der Anschlusskammer angeordnete Überströmöffnung (oder auch mehrere Überströmöffnungen) als schmaler Randschlitz ausgebildet, wobei die Schlitzbreite zum Zurückhalten von in der Hydraulikflüssigkeit enthaltenen Luftblasen dimensioniert ist.
Zurückgehalten werden dabei insbesondere Luftbläschen, die schwerkraftbedingt in der Hydraulikflüssigkeit aufsteigen.

Nach einer Ausführungsform der Erfindung kann die Überströmöffnung von der Anschlusskammer zum Ausgleichsbehälter anstatt in der Begrenzungswand der Anschlusskammer in einem auf der Begrenzungswand aufliegenden Gegenstück angeordnet sein. Das auf der Begrenzungswand aufliegende Gegenstück kann insbesondere der Deckel oder eine Dichtung zwischen dem Deckel und dem Ausgleichsbehälter sein.

Dies ist vor allem dann vorgesehen, wenn das Einbringen einer oder mehrerer Überströmöffnungen in die Anschlusskammer-Begrenzungswand problematisch ist.
Beispielsweise kann dies bei einem Gebergehäuse aus Metall, insbesondere aus geschmiedetem. Metall der Fall sein, weil vergleichsweise filigrane Ein- und Ausformungen hierbei nur schwierig und insbesondere nicht ohne aufwendige Nacharbeiten realisierbar sind.
Die Überströmöffnung(en) von der Anschlusskammer zum Ausgleichsbehälter können in einem solchen Fall im Deckel selbst oder in einer Dichtung zwischen dem Deckel und dem Ausgleichsbehälter vorgesehen sein.
Die Überströmöffnung(en) kann dabei in ihrem die Begrenzungswand überdeckenden Bereich kanalförmig als randoffene Nut ausgebildet sein, die mit ihrer Öffnung der Begrenzungswand zugewandt ist und diese übergreift. Bevorzugt ist vorgesehen, dass die Dichtung mit der wenigstens einen Überströmöffnung der umlaufende Seitenflansch des elastischen Balgs ist.

Zusätzliche Ausgestaltungen der Erfindung sind in den weiteren Unteransprüchen aufgeführt. Nachstehend ist die Erfindung anhand der Zeichnungen in einem Ausführungsbeispiel näher erläutert. Es zeigt:
- Fig. 1: eine Ansicht einer hydraulischen Bremsanlage mit einem Gebersystem und einer an einer Bremsscheiben angeordneten Bremsvorrichtung,
- Fig. 2: eine Schnittdarstellung des in Fig.1 gezeigten Gebersystems,
- Fig. 3: eine Schnittdarstellung der in Fig.1 gezeigten Bremsvorrichtung,
- Fig. 4: eine Schnittdarstellung eines Gebersystems in einer Befüll- und Entlüftungsposition mit angesetztem Entlüftungs- und Befüllwerkzeug,
- Fig. 5: eine Schnittdarstellung des Gebersystems in Betriebsposition,
- Fig. 6: eine vergrößerte Darstellung des Gebersystems gemäß Fig.4 in Befüll- und Entlüftungsposition,
- Fig. 7: eine vergrößerte Schnittdarstellung des Gebersystems gemäß Fig.5 in Betriebsposition,
- Fig. 8: eine Aufsicht eines Gebersystems mit offenem Ausgleichsbehälter,
- Fig. 9: eine Aufsicht eines Gebersystems mit angesetztem Entlüftungs- und Befüllwerkzeug,
- Fig. 10: eine Aufsicht eines Ausgleichsbehälter-Deckels,
- Fig. 11: eine Seitenansicht des in Fig.10 gezeigten Deckels,
- Fig. 12: eine vergrößerte Darstellung eines Deckelbereichs mit einer Befüll- und Entlüftungsöffnung,
- Fig. 13: eine perspektivische Ansicht eines Balgs,
- Fig. 14: eine Schnittdarstellung des Gebersystems mit Überströmöffnungen im umlaufenden Seitenflansch eines elastischen Balgs,
- Fig. 15: eine Schmalseitenansicht eines Balgs mit Überströmöffnungen und
- Fig. 16: eine Unterseitenansicht des in Fig.15 gezeigten Balgs.

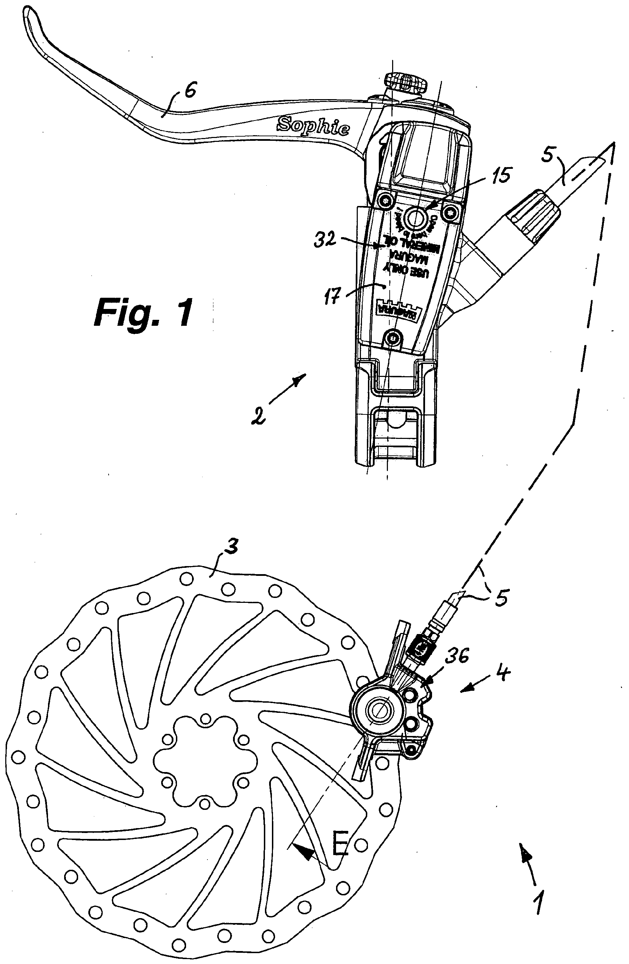

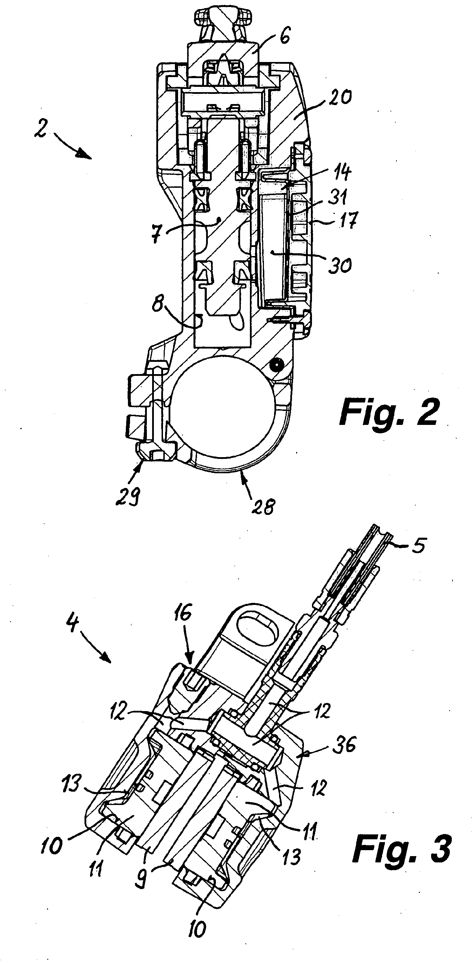

Eine in Fig.1 gezeigte, hydraulische Bremsanlage 1 ist insbesondere für Fahrräder, gegebenenfalls aber auch für andere Zweiräder einsetzbar. Sie weist ein Gebersystem 2 sowie eine an einer Bremsscheibe 3 angesetzte Bremsvorrichtung 4 auf. Die Bremsanlage ist mit Hydraulikflüssigkeit gefüllt, wobei das Gebersystem 2 über eine strichliniert angedeutete Hydraulikleitung 5 mit der Bremsvorrichtung 4 verbunden ist.
Das Gebersystem 2 weist einen handbetätigbaren Bremshebel 6 auf, mit dem ein in einem Zylinder 8 geführter Geberkolben 7 (vgl. Fig.2) bewegt werden kann und dabei Hydraulikflüssigkeit über die Hydraulikleitung 5 zu der Bremsvorrichtung 4 fördert. Diese Bremsvorrichtung 4 weist eine Bremszange 36 auf, die an der mit dem zu bremsenden Rad verbundenen Bremsscheibe 3 angeordnet ist. Die Bremsscheibe 3 wird beim Bremsen beidseitig mit zwei Bremsbelägen 9 beaufschlagt (Fig.3). Dazu sind in Bremszylindern 10 geführte Bremskolben 11 vorgesehen, die rückseitig mit Hydraulikflüssigkeit beaufschlagbar sind. Die Hydraulikflüssigkeit wird dabei von der Hydraulikleitung 5 über Kanäle 12 zu hinter den Bremskolben 11 befindlichen Druckkammern 13 geführt.
Das Gebersystem 2 weist einen Ausgleichsbehälter 14 für Hydraulikflüssigkeit auf, der bei unbetätigtem Bremshebel 6 mit dem Zylinder 8 und damit dem Hydraulikkreislauf verbunden ist.

Um das Hydrauliksystem befüllen und entlüften zu können, weist das Gebersystem 2 oberseitig eine Befüll- und Entlüftungsöffnung 15 und die Bremsvorrichtung 4 ebenfalls eine Befüll- und Entlüftungsöffnung.16 (Fig.3) auf.

Der Bremsanlage 1 ist ein Entlüftungs- und Befüllwerkzeug 23 mit einer Kolben-Zylinderanordnung zugeordnet und die Befüll- und Entlüftungsöffnung 15 des Gebersystems 2 und vorzugsweise auch die Befüll- und Entlüftungsöffnung 16 der Bremsvorrichtung 4 sind zum lösbaren und dichten Anschließen dieses Entlüftungs- und Befüllwerkzeugs 23 ausgebildet. Die lösbare Verbindung zwischen dem Entlüftungs- und Befüllwerkzeug 23 und der Befüll- und Entlüftungsöffnung 15,16 des Gebersystems beziehungsweise der Bremsvorrichtung 4 wird dabei durch dichtendes Einstecken gebildet. Das Entlüftungs- und Befüllwerkzeug 23 hat dazu einen Anschlussstutzen 22 oder dergleichen Anschlusselement, der in die Befüll- und Entlüftungsöffnung(en) gesteckt wird.

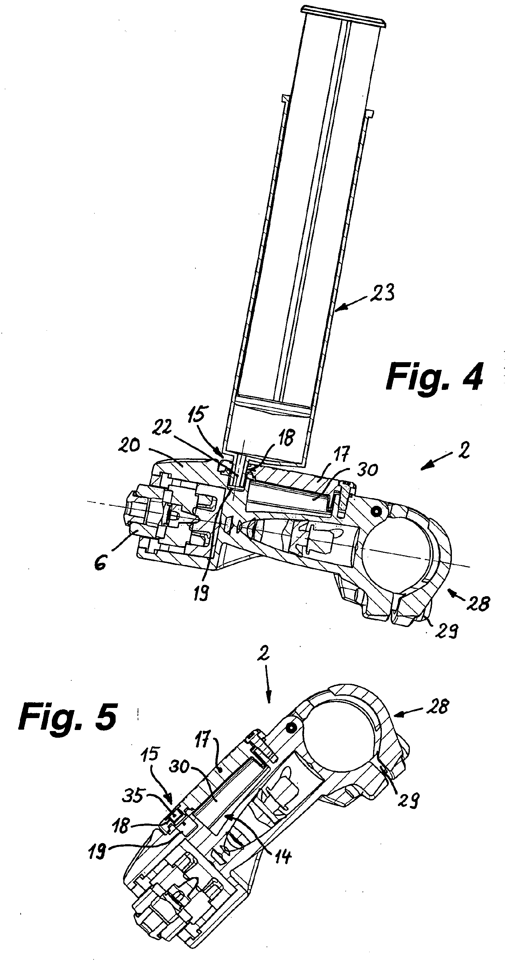

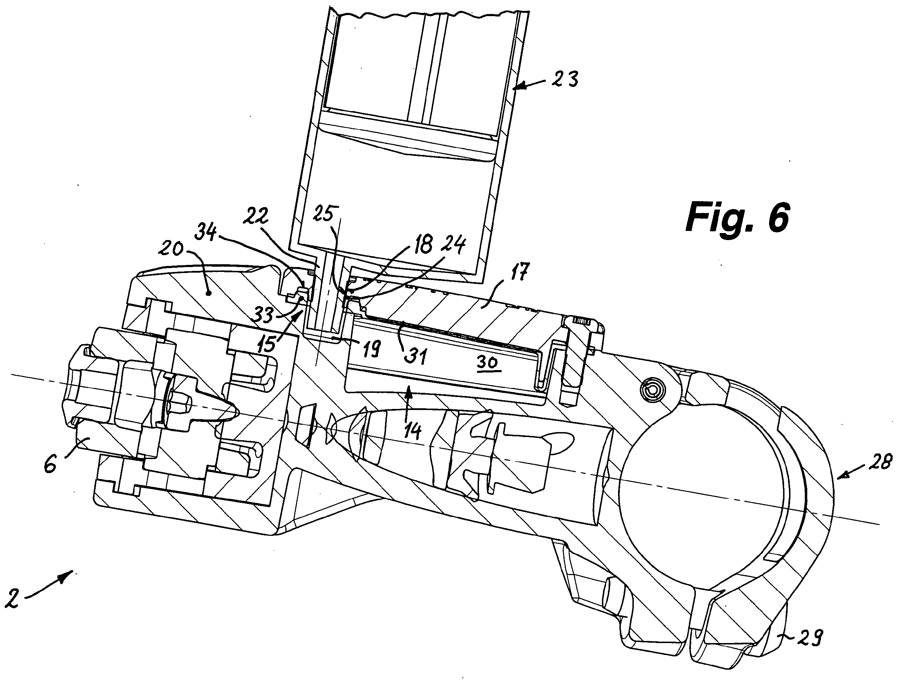

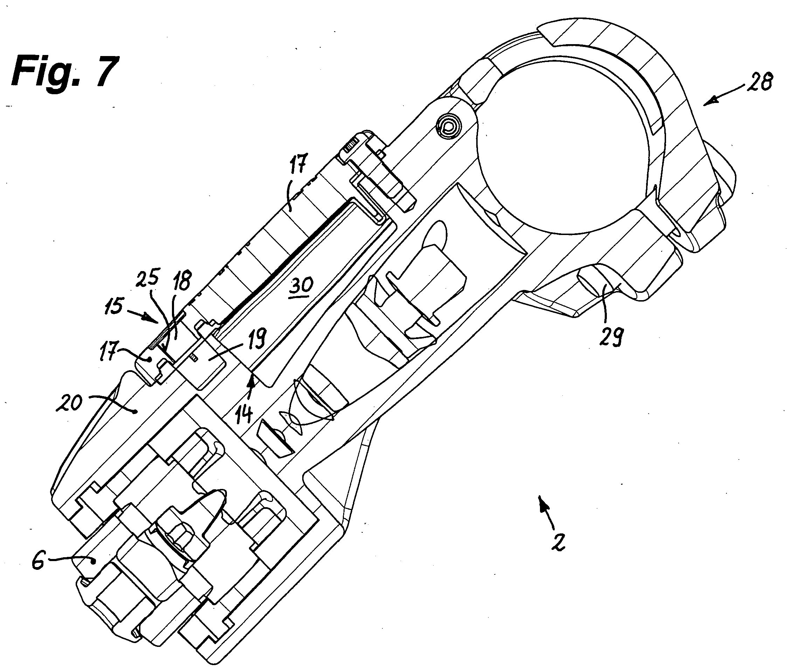

Insbesondere in Fig.7 ist gut erkennbar, dass die Befüll- und Entlüftungsöffnung 15 im Deckel 17 einen Einsteckabschnitt 18 aufweist, an den sich vorzugsweise fluchtend in axialer Verlängerung eine Anschlusskammer 19 im Gebergehäuse 20 anschließt. Die Anschlusskammer 19 ist topf- oder napfförmig ausgebildet und weist an ihrem Oberrand schlitzförmige, randoffene Überströmöffnungen 21 zu dem Ausgleichsbehälter 14 auf. Dadurch besteht eine Strömungsverbindung zwischen dieser Anschlusskammer 19 und dem Ausgleichsbehälter 14.
Der Einsteckabschnitt 18 der Befüll- und Entlüftungsöffnung 15 ist zur dichten Aufnahme des Anschlussstutzens 22 des Entlüftungs- und Befüllwerkzeugs 23 ausgebildet und weist dazu einen Aufnahmekonus 25 auf. Der Aufnahmekonus 25 ist zur Einsteck-Aufnahme eines als Luerkonus 24 ausgebildeten Anschlussstutzens 22 des Entlüftungs- und Befüllwerkzeugs 23 ausgebildet (Fig.6). Dadurch besteht die Möglichkeit, als Entlüftungs- und Befüllwerkzeug 23 eine handelsübliche Spritze, wie in Fig.4, 6 und 9 erkennbar, zu verwenden.
Die Einsteckverbindung mit dem Aufnahmekonus 25 und dem Anschlussstutzen 22 ist so dimensioniert, dass der Anschlussstutzen 22 in Einstecklage bereichsweise in die Anschlusskammer 19 ragt, wobei er mit seinem inneren Ende noch etwas Abstand zum Grund der Anschlusskammer 19 hat, wie
dies gut in Fig. 6 erkennbar ist. In dieser Einstecklage ist der Anschlussstutzen 22 des Entlüftungs- und Befüllwerkzeugs 23 sicher in dem Deckel 17 gehalten, so dass auch beim Manipulieren während eines Entlüftungs- oder Befüllvorganges ein unbeabsichtigtes Herausrutschen sicher vermieden wird.
Die Anschlusskammer 19 hat lichte Abmessungen, die größer als die des hineinragenden Teils des Anschlussstutzens 22 sind, so dass noch Platz für ein Überströmen von Hydraulikflüssigkeit durch die Überströmöffnungen 21 vorhanden ist.
Im gezeigten Ausführungsbeispiel ist die Befüll- und Entlüftungsöffnung 15 des Gebersystems 2 oberseitig an diesem vorgesehen und durchsetzt einen den Ausgleichsbehälter 14 oberseitig verschließenden Deckel 17 (Fig.4 bis 7), der durch Verschraubungen mit dem Gebergehäuse 20 verbunden ist.

Die Ausbildung der einen Zuführkanal zum Ausgleichsbehälter 14 bildenden Befüll- und Entlüftungsöffnung 15 einerseits aufgeteilt in zwei vorzugsweise axial fluchtende Abschnitte - Einsteckabschnitt 18, Anschlusskammer 19- und andererseits angeordnet in zwei getrennt herstellbaren Teilen -Deckel 17, Gebergehäuse 17- hat fertigungstechnisch erhebliche Vorteile, weil es sich um Einzelbohrungen handelt, die durch Formstifte einfach herstellbar sind. Bei dem Zuführkanal der Befüll- und Entlüftungsöffnung 15 handelt es sich in Funktionslage um eine Stufenbohrung mit einer innenliegenden, im Durchmesser größeren Stufe, was bei einer einteiligen Ausführung formungstechnisch wegen des Hinterschnitts einen erhöhten Aufwand bedeuten würde.
Der Einsteckabschnitt 18 im Deckel 17 und die Anschlusskammer 19 im Gebergehäuse 20 sind bezüglich ihrer Längsachsen so ausgerichtet, dass sie jeweils in Entformungsrichtung des Deckels beziehungsweise des Gebergehäuses verlaufen und damit ein problemloses Entformen ermöglichen. Durch die randoffene

Ausbildung der vorzugsweise schlitzförmigen Überströmöffnungen 21, die ebenfalls in Entformungsrichtung orientiert sind, sind diese ebenfalls einfach herstellbar.

In dem Ausführungsbeispiel ist die Befüll- und Entlüftungsöffnung 15 seitlich neben dem Ausgleichsbehälter 14 angeordnet und befindet sich in Befüll- und Entlüftungsposition gemäß Fig.6 auf der höchsten Seite neben dem Ausgleichsbehälter 14. Der Deckel 17 ist dabei so ausgebildet, dass er auch diesen, seitlich neben dem Ausgleichsbehälter 14 befindlichen Bereich des Gebergehäuses 20 übergreift.

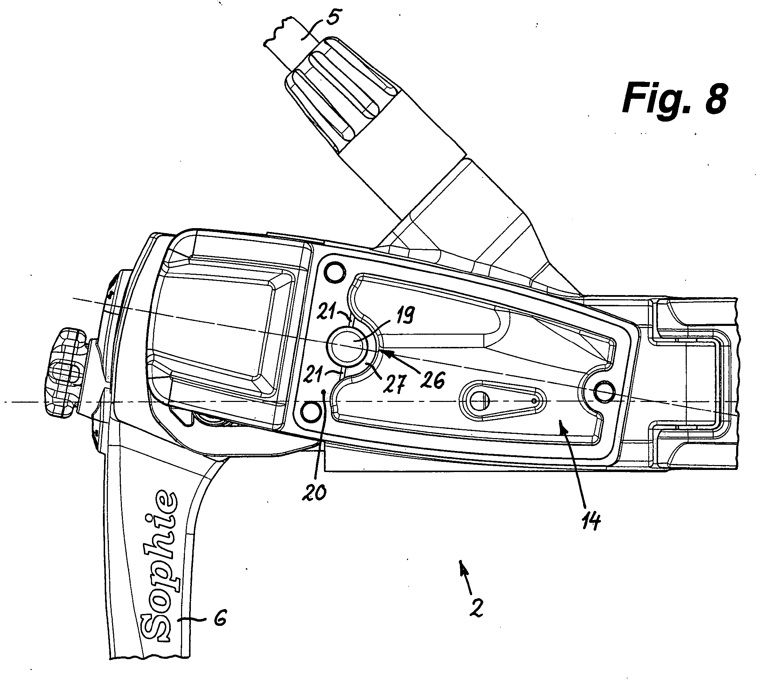

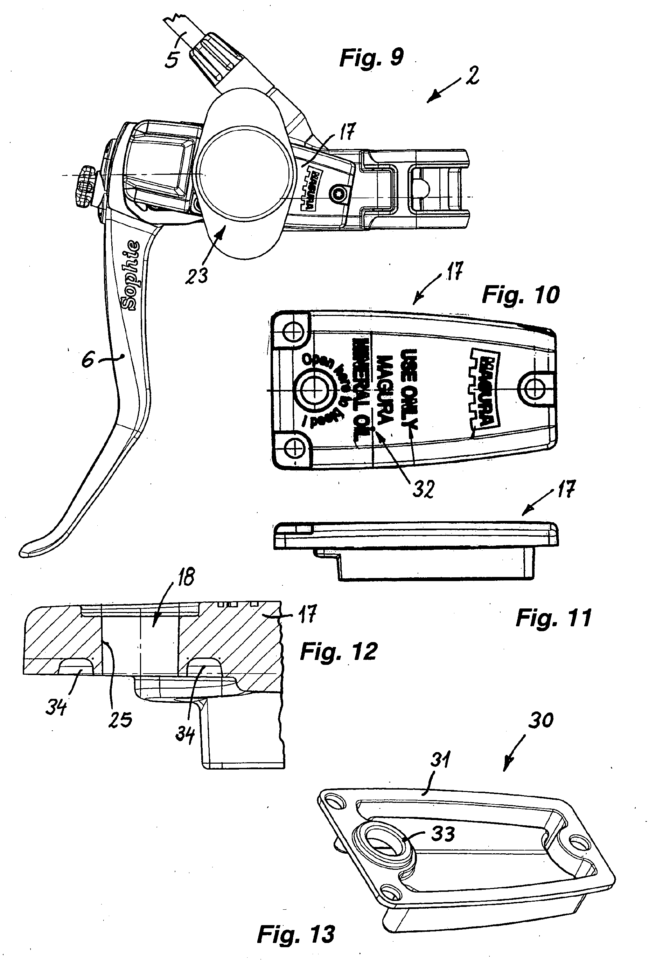

In Fig.8 ist gut bei oben offenem Ausgleichsbehälter 14, also ohne Deckel 17 und entferntem Balg 30 (Fig.13) erkennbar, dass die Anschlusskammer 19 der Befüll- und Entlüftungsöffnung 15 in einer seitlich in den Ausgleichsbehälter 14 ragenden Ausbuchtung 26 des Gebergehäuses 20 angeordnet ist. Die Anschlusskammer 19 ist dabei von einer Umgrenzungswand 27 umgeben, in der sich die zwei schlitzförmigen, nach oben randoffenen Überströmöffnungen 21 befinden. Die beiden Überströmöffnungen 21 sind dabei seitlich versetzt zu dem vordersten, dem Ausgleichsbehälter 14 zugewandten Bereich der Ausbuchtung 26 angeordnet. Dadurch wird erreicht, dass nach einem Befüll- oder Entlüftungsvorgang gegebenenfalls noch in der Anschlusskammer 19 befindliche Luftbläschen in der in Fig.7 gezeigten, schrägen Betriebsposition des Gebersystems 2 nicht über die Überströmöffnungen 21 in den Ausgleichsbehälter 14 gelangen können sondern im etwas höher liegenden Teil der Anschlusskammer 19 gefangen bleiben. Dazu trägt auch bei, dass die Überströmöffnungen 21 als schmale Randschlitze ausgebildet sind, wobei die Schlitzbreite zum Zurückhalten von in der Hydraulikflüssigkeit enthaltenen Luftblasen dimensioniert ist.

In dem Ausgleichsbehälter 14 ist ein elastischer Balg 30 eingesetzt, der, wie in Fig.13 erkennbar, wannenförmig ausgebildet ist und an seinem Öffnungsrand eine umlaufende, als Flansch ausgebildeten Dichtung 31 aufweist. Dieser Balg 31 wird in den Ausgleichsbehälter 14 eingesetzt und füllt diesen bereichsweise aus. Die Dichtung 31 liegt auf dem Randbereich des Ausgleichsbehälters und damit auf dem Gebergehäuse 20 auf. Durch den aufgesetzten Deckel 17 erfolgt dann ein Verschließen und Abdichten sowohl des Balgs 30 als auch des Ausgleichsbehälters 14 nach außen. Der Hohlraum des Balgs 30 ist über eine Balgbelüftungsöffnung 32 (Fig.1 und 10) durch den Deckel 17 hindurch mit der Außenatmosphäre verbunden.
Die zwischen dem Ausgleichsbehälter 14 und dem ihn oberseitig abdichtenden Deckel 17 umlaufende Dichtung 31, die durch den Seitenflansch des Balgs 30 gebildet ist, erstreckt sich auch in den Seitenbereich neben den Ausgleichsbehälter 14 und dabei zwischen den Einsteckabschnitt 18 und die Anschlusskammer 19 der Befüll- und Entlüftungsöffnung 15.
In diesem Bereich ist die Dichtung 31 mit einer Ringswulst 33 versehen, wie dies gut in Fig.6 und 13 erkennbar ist. In etwa komplementär zu dieser Ringwulst 33 weist der den Einsteckabschnitt 18 umgebende Deckelbereich eine Ringnut 34 zur dichtenden Aufnahme dieser Ringwulst 33 auf (Fig.12). Die Ringwulst 33 liegt mit ihrer Unterseite auf dem Oberrand der Anschlusskammer 19 beziehungsweise deren Begrenzungswand 27 auf (Fig.6). Die in der Begrenzungswand 27 befindlichen, randoffenen Überströmöffnungen 21 werden von der Ringwulst 33 überbrückt, wobei die erhöhte Eigenstabilität der Ringwulst 33 im Vergleich zu der flachen Ausführung der Dichtung im benachbarten Bereich auch im Überbrückungsbereich für eine gute Dichtigkeit sorgt.

Bei abgenommenem Entlüftungs- und Befüllwerkzeug 23 kann die Befüll- und Entlüftungsöffnung 15 mit einem elastischen, vorzugsweise mit einem Konus versehenen Verschlussstopfen 35 (Fig.5) verschlossen werden.

Die Befüll- und Entlüftungsöffnung 15 weist einen Einsteckabschnitt 18 mit einem Aufnahmekonus 25 auf, in den der mit einem dazu passenden Außenkonus versehene Verschlussstopfen 35 einsteckbar ist. Die Abdichtung erfolgt hierbei durch die Konusverbindung.

Der Verschlussstopfen 35 kann eine von außen zugängliche Einsteckhöhlung als Werkzeugangriffsstelle für ein Drehwerkzeug aufweisen, die bevorzugt als Innensechskant für einen Sechskantschlüssel als Drehwerkzeug ausgebildet ist.

Der Verschlussstopfen 35 kann dadurch nach dem Einsetzen des Drehwerkzeugs mit diesem etwas verdreht und dabei, unterstützt durch die Konusverbindung, herausgezogen werden. Durch die innen liegende Werkzeugangriffsstelle kann der eingesteckte Verschlussstopfen etwa bündig mit der Außenseite des Deckels oder der Öffnung des Einsteckabschnitts 18 im Deckel 17 abschließen oder sogar etwas tiefer liegen, so dass ein unbeabsichtigtes Lösen oder Entfernen des Verschlussstopfens praktisch ausgeschlossen ist.

Der Verschlussstopfen kann aus Hartkunststoffmaterial bestehen, beispielsweise aus dem gleichen Werkstoff wie der Deckel 17. Auch andere Materialien kommen in Frage, wobei nur sicher gestellt sein muss, dass das Moment zum Verdrehen des Verschlussstopfens 35 vom Drehwerkzeug übertragen werden kann.

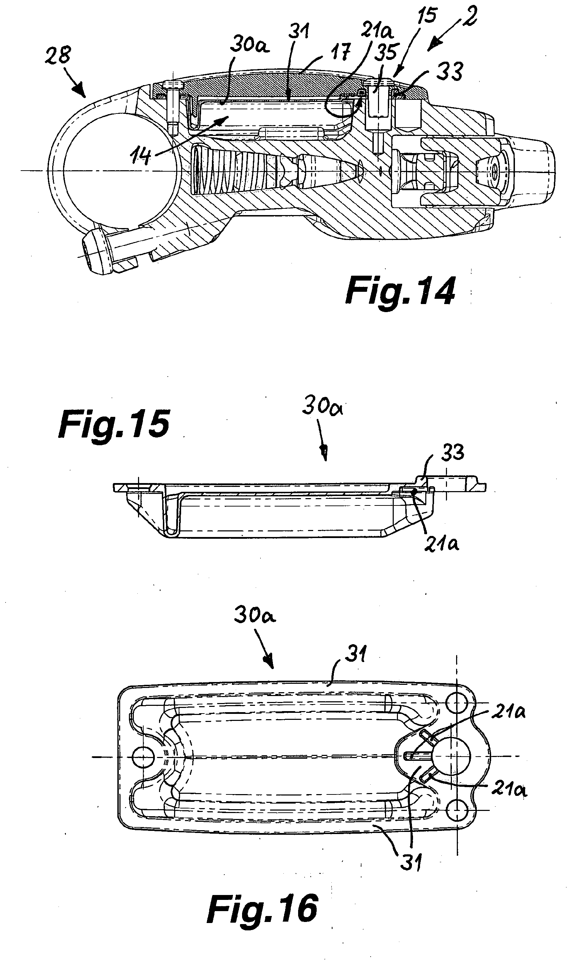

Bei dem in Fig. 14 im Schnitt dargestellten Gebersystem 2 sind Überströmöffnungen 21a von der Anschlusskammer zum Ausgleichsbehälter anstatt, wie vorbeschrieben, in der Begrenzungswand 27 der Anschlusskammer 19, in einem auf der Begrenzungswand aufliegenden Gegenstück angeordnet, welches im Ausführungsbeispiel die Dichtung 31 zwischen dem Deckel und dem Ausgleichsbehälter als Teil des Balgs 30a ist. Die Dichtung 31 ist dabei durch den umlaufenden Seitenflansch des elastischen Balgs 30a (Fig.15 und 16) gebildet.
Dieser Dichtungs- oder Seitenflansch erstreckt sich über den Bereich der Anschlusskammer 19 und deren Begrenzungswand 27, wobei die im Ausführungsbeispiel drei kanalförmigen Überströmöffnungen 21a (Fig.16) im Balg-Seitenflansch und damit der Dichtung 31 angeordnet sind und die Begrenzungswand 27 überdecken, also mit ihren Enden einerseits in den Ausgleichsbehälter 14 und andererseits in die Anschlusskammer 19 ragen. Durch diese Überströmöffnungen oder Überströmkanäle ist eine Strömungsverbindung zwischen der Anschlusskammer 19 und dem Ausgleichsbehälter 14 vorhanden.
Die Überströmöffnungen 21a sind als randoffene Nuten ausgebildet, die mit ihren Öffnungen der Begrenzungswand 27 zugewandt sind.
Die Dichtung 31 ist im Auflagebereich auf der Begrenzungswand 27 der Anschlusskammer 19 aufgedickt (Fig.15), so dass einerseits in diesem Bereich eine erhöhte Eigenstabilität vorhanden ist und andererseits die Platzverhältnisse für im Querschnitt ausreichend dimensionierte Überströmöffnungen 21a vorhanden sind.

Erwähnt sei noch, dass die wenigstens eine Überströmöffnung 21 von der Anschlusskammer 19 zum Ausgleichsbehälter 14 auch direkt im Deckel 17 vorgesehen sein kann, wenn dieser aus geeignetem Material besteht, um eine Abdichtung zur Anschlusskammer 19 zu erreichen. Auch hierbei sind die Überströmöffnungen an der entsprechenden Stelle wie bei der Dichtung 31 angeordnet. Weiterhin könnte die wenigstens eine Überströmöffnung auch als Bohrung in der Seitenwand der Anschlusskammer 19 ausgeführt sein. Bei formgebenden Verfahren wie zum Beispiel Spritzgießen sind jedoch randoffene Überströmöffnungen spritztechnisch einfacher realisierbar.

Das Gebersystem 2 ist mittels einer Halterung 28 mit dem Lenker eines Zweirads verbindbar. Die Halterung 28 ist schellenartig ausgebildet und kann mit Hilfe einer Spannschraube 29 angezogen oder gelockert werden. Dadurch lässt sich das Gebersystem leicht in die passende Position einerseits für den Betrieb (Fig.5 und 7) und dementsprechend passend für eine gute Bedienbarkeit und andererseits für den Befüll- und Entlüftungsvorgang (Fig.4 und 6) entsprechend verstellen. Erwähnt sei noch, dass für den Befüll- und insbesondere den Entlüftungsvorgang das Gebersystem 2 von einer Lage mit nahezu, vertikalem Entlüftungs- und Befüllwerkzeug 23 wie in Fig.4 und 6 dargestellt, bis zu einer etwa waagerechten Lage des Entlüftungs- und Befüllwerkzeugs 23 gut möglich ist.

Zum Befüllen des Hydrauliksystems kann die das Entlüftungs- und Befüllwerkzeug 23 bildende Spritze gemäß Fig.4, 6 und 9 oberseitig auf das Gebersystem 2 aufgesteckt und dabei mit ihrem Anschlussstutzen 22 dicht in den Aufnahmekonus 25 der Befüll- und Entlüftungsöffnung 15 eingesetzt werden. Durch die vorgesehene Konusverbindung ergibt sich schon bei leichtem Eindrücken eine sichere und dichte Verbindung. Bei der Bremsvorrichtung 4 kann an die Befüll- und Entlüftungsöffnung 16 ein Behälter mit Hydraulikflüssigkeit angeschlossen werden, wobei dieser Behälter auch eine mit Hydraulikflüssigkeit gefüllte Spritze sein kann. Vorzugsweise ist die Befüll- und Entlüftungsöffnung 16 der Bremsvorrichtung 4 ebenfalls mit einem Luer-Aufnahmekonus versehen, so dass auch hier handelsübliche Spritzen als Entlüftungs- und Befüllwerkzeug 23 angesetzt werden können. Mit der oben bei dem Gebersystem 2 angesetzten Spritze wird die Hydraulikflüssigkeit angesaugt und strömt dann von unten in das Hydrauliksystem. Die untere, mit Hydraulikflüssigkeit gefüllte Spritze kann dabei unterstützend betätigt werden, so dass der Befüllvorgang schnell abgeschlossen werden kann.

## Patentansprüche

1. Bremssystem für Fahrräder, mit einer hydraulischen Bremsanlage (1), mit einer Befüllvorrichtung für die Bremsanlage, wobei die Bremsanlage ein mit Hydraulikflüssigkeit gefülltes Gebersystem (2) und eine hydraulisch damit verbundene Bremsvorrichtung (4) aufweist, wobei das Bremssystem einen Ausgleichsbehälter (14) und eine Befüll- und Entlüftungsöffnung (16) aufweist, die zum lösbaren Anschließen eines Entlüftungs- und Befüllwerkzeugs (23) mit einer Kolben-Zylinderanordnung ausgebildet ist, wobei der Ausgleichsbehälter (14) und die Befüll- und Entlüftungsöffnung (16) am Gebersystem (2) angeordnet sind und die Befüll- und Entlüftungsöffnung (16) oberseitig an dem Gebersystem (2) angeordnet ist, dass ein Verschlussstopfen (35) zum Verschließen der Befüll- und Entlüftungsöffnung (15) vorgesehen ist, **dadurch gekennzeichnet, dass** die Befüll- und Entlüftungsöffnung (15) einen Einsteckabschnitt (18) mit einem Aufnahmekonus (25) aufweist, und dass der Verschlussstopfen (35) einen dazu passenden Außenkonus hat.

2. Bremssystem nach Anspruch 1, **dadurch gekennzeichnet, dass** die Befüll- und Entlüftungsöffnung (15) des Gebersystems (2) in einem Deckel (17) des Ausgleichsbehälters (14) angeordnet ist.

3. Bremssystem nach Anspruch 1 oder 2, **dadurch gekennzeichnet, dass** die lösbare Verbindung zwischen dem Entlüftungs- und Befüllwerkzeug (23) und zumindest der Befüll- und Entlüftungsöffnung (15) des Gebersystems (2) durch dichtendes Einstecken gebildet ist.

4. Bremssystem nach einem der Ansprüche 1 bis 3, **dadurch gekennzeichnet, dass** die Bremsvorrichtung (4) eine Befüll- und Entlüftungsöffnung (16) aufweist, die zum lösbaren Anschließen des Entlüftungs- und Befüllwerkzeugs (23) und vorzugsweise zum dichtenden Einstecken ausgebildet ist.

5. Bremssystem nach einem der Ansprüche 1 bis 4, **dadurch gekennzeichnet, dass** das Entlüftungs- und Befüllwerkzeug (23) einen Anschlussstutzen (22) oder dergleichen Anschlusselement zum dichtenden Einstecken in die Befüll- und Entlüftungsöffnung(en) (15,16) hat.

6. Bremssystem nach Anspruch 5, **dadurch gekennzeichnet, dass** der Anschlussstutzen (22) des Entlüftungs- und Befüllwerkzeugs (23) einen Luerkonus (24) oder einen LuerLock aufweist und dass die Befüll- und Entlüftungsöffnung (15) des Gebersystems (2) und gegebenenfalls die Befüll- und Entlüftungsöffnung (16) der Bremsvorrichtung (4) passend zu dem Anschlussstutzen (22) ausgebildet ist.

7. Bremssystem nach einem der Ansprüche 1 bis 6, **dadurch gekennzeichnet, dass** das Entlüftungs- und Befüllwerkzeug (23) eine handelsübliche Spritze ist.

8. Bremssystem nach einem der Ansprüche 1 bis 7, **dadurch gekennzeichnet, dass** das Entlüftungs- und Befüllwerkzeug (23) in das Gebersystem (2) integriert ist.

9. Bremssystem nach einem der Ansprüche 1 bis 8, **dadurch gekennzeichnet, dass** zumindest die Befüll- und Entlüftungsöffnung (15) des Gebersystems (2) in einem Ausgleichsbehälterdeckel (17) einen Einsteckabschnitt (18) zur dichten Aufnahme des Anschlussstutzens (22) des Entlüftungs- und Befüllwerkzeugs (23) aufweist, dass sich an den Einsteckabschnitt (18) in Einsteckrichtung eine vorzugsweise napfförmig ausgebildete Anschlusskammer (19) im Gebergehäuse (20) anschließt, in die ein Teil des Anschlussstutzens (22) hineinragt und die wenigstens eine Verbindung zum Ausgleichsbehälter hat.

10. Bremssystem nach Anspruch 9, **dadurch gekennzeichnet, dass** die Anschlusskammer (19) eine seitliche Begrenzungswand (27) zum Ausgleichsbehälter hat und dass in der Begrenzungswand (27) wenigstens eine oben randoffene Überströmöffnung als Verbindung zum Ausgleichsbehälter (14) vorgesehen ist.

11. Bremssystem nach Anspruch 9 oder 10, **dadurch gekennzeichnet, dass** die Anschlusskammer (19) lichte Innenabmessungen hat, die größer sind als das hineinragende Teil des Anschlussstutzens (22) und dass die randoffene Überströmöffnung (21) in der Begrenzungswand (27) der Anschlusskammer (19) in Betriebsposition des Gebersystems (2) in einem der höchsten Stelle der seitlichen Begrenzungswand (27) beabstandeten Bereich angeordnet ist.

12. Bremssystem nach Anspruch 10 oder 11, **dadurch gekennzeichnet, dass** zwei vorzugsweise gegenüberliegend angeordnete, randoffene Überströmöffnungen (21) in der Begrenzungswand (27) der Anschlusskammer (19) vorgesehen sind.

13. Bremssystem nach einem der Ansprüche 10 bis 12, **dadurch gekennzeichnet, dass** die in der Begrenzungswand (27) der Anschlusskammer angeordnete(n) Überströmöffnung(en) (21) als schmaler Randschlitz ausgebildet ist (sind) und dass die Schlitzbreite zum Zurückhalten von in der Hydraulikflüssigkeit enthaltenen Luftblasen dimensioniert ist.

14. Bremssystem nach einem der Ansprüche 1 bis 13, **dadurch gekennzeichnet, dass** der Verschlussstopfen (35) eine von außen zugängliche Einsteckhöhlung als Werkzeugangriffsstelle für ein Drehwerkzeug hat.

15. Bremssystem nach einem der vorhergehenden Ansprüche, **dadurch gekennzeichnet, dass** die Einsteckhöhlung des Verschlussstopfens (35) als Innensechskant für einen Sechskantschlüssel als Drehwerkzeug ausgebildet ist.

16. Bremssystem nach einem der vorhergehenden Ansprüche, **dadurch gekennzeichnet, dass** der in die Befüll- und Entlüftungsöffnung (15) eingesteckte Verschlussstopfen (35) etwa bündig mit der Öffnung des Einsteckabschnitts (18) oder des Deckels abschließt.

17. Bremssystem nach einem der vorhergehenden Ansprüche, **dadurch gekennzeichnet, dass** der Verschlussstopfen (35) aus Hartkunststoffmaterial besteht.

18. Bremssystem nach einem der vorhergehenden Ansprüche, **dadurch gekennzeichnet, dass** der Außenkonus des Verschlussstopfens (35) einem Luerkonus entspricht.

19. Bremssystem nach einem der einem der vorhergehenden Ansprüche, **dadurch gekennzeichnet, dass** das Gebersystem (2) mittels einer Halterung (28) mit einem Teil des Zweirads, vorzugsweise dem Lenker verbunden ist, die zum Verstellen des Gebersystems (2) zumindest in eine Befüll- und Entlüftungsposition und eine Betriebsposition ausgebildet ist.

20. Bremssystem nach einem der einem der vorhergehenden Ansprüche, **dadurch gekennzeichnet, dass** die Befüll- und Entlüftungsöffnung (15) einen in einem Deckel (17) des Ausgleichsbehälters (14) angeordneten Einsteckabschnitt (18) zur dichten Aufnahme des Entlüftungs- und Befüllwerkzeugs (23) aufweist, an den sich in Einsteckrichtung eine Anschlusskammer (19) im Gebergehäuse (20) anschließt, die eine seitliche Begrenzungswand (27) zum Ausgleichsbehälter (14) hat und dass in der Begrenzungswand (27) oder in einem auf der Begrenzungswand aufliegenden Gegenstück wenigstens eine Überströmöffnung (21) zum Ausgleichsbehälter (14) vorgesehen ist.

21. Bremssystem nach Anspruch 20, **dadurch gekennzeichnet, dass** die wenigstens eine Überströmöffnung (21) von der Anschlusskammer (19) zum Ausgleichsbehälter (14) im Deckel (17) vorgesehen ist.

22. Bremssystem nach Anspruch 20 oder 21, **dadurch gekennzeichnet, dass** die wenigstens eine Überströmöffnung (21a) von der Anschlusskammer (19) zum Ausgleichsbehälter (14) in einer Dichtung (31) zwischen dem Deckel (17) und dem Ausgleichsbehälter (14) vorgesehen ist.

23. Bremssystem nach Anspruch 22, **dadurch gekennzeichnet, dass** die in der Dichtung (31) vorgesehene(n) Überströmöffnung(en) (21a) als in ihrem die Begrenzungswand (27) überdeckenden Bereich randoffene Nut ausgebildet ist, die mit ihrer Öffnung der Begrenzungswand zugewandt ist.

24. Bremssystem nach Anspruch 22 oder 23, **dadurch gekennzeichnet, dass** die Dichtung (31) zumindest im Auflagebereich auf der Begrenzungswand (27) der Anschlusskammer (19) aufgedickt ist und dort die wenigstens eine randoffene, insbesondere nutförmige Überströmöffnung (21a) aufweist.

25. Bremssystem nach einem der Ansprüche 22 bis 24, **dadurch gekennzeichnet, dass** die Dichtung (31) mit der wenigstens einen Überströmöffnung (21a), der umlaufende Seitenflansch des elastischen Balgs (30a) ist.

## Claims

1. Braking system for bicycles, having a hydraulic brake device (1), having a filling apparatus for the brake device, the brake device including a master system (2) filled with hydraulic fluid and a brake apparatus (4) hydraulically connected thereto, the braking system having a compensating container (14) and a filling and venting opening (16) which is designed for releasable connecting a venting and filling tool (23) with a piston-cylinder assembly, the compensating container (14) and the filling and venting opening (16) being arranged on the master system (2) and the filling and venting opening (16) being arranged on the top side of the master system (2), and a sealing plug (35) for closing the filling and venting opening (15) being provided, **characterized in that** the filling and venting opening (15) has an insertion portion (18) with a receiving cone (25), and **in that** the sealing plug (35) has a matching outer cone.

2. Braking system according to claim 1, **characterized in that** the filling and venting opening (15) of the master system (2) is arranged in a cover (17) of the compensating container (14).

3. Braking system according to claim 1 or 2, **characterized in that** the releasable connection between the venting and filling tool (23) and at least the filling and venting opening (15) of the master system (2) is formed by sealing insertion.

4. Braking system according to any of claims 1 to 3, **characterized in that** the brake apparatus (4) has a filling and venting opening (16), which is designed for releasable connecting the venting and filling tool (23) and preferably for sealing insertion.

5. Braking system according to any of claims 1 to 4, **characterized in that** the venting and filling tool (23) has a connecting piece (22) or similar connecting element for the sealing insertion into the filling and venting opening(s) (15, 16).

6. Braking system according to claim 5, **characterized in that** the connecting piece (22) of the venting and filling tool (23) has a Luer cone (24) or a Luer lock, and **in that** the filling and venting opening (15) of the master system (2) and, if appropriate, the filling and venting opening (16) of the brake apparatus (4) is designed to match the connecting piece (22).

7. Braking system according to any of claims 1 to 6, **characterized in that** the venting and filling tool (23) is a commercially available syringe.

8. Braking system according to any of claims 1 to 7, **characterized in that** the venting and filling tool (23) is integrated into the master system (2).

9. Braking system according to any of claims 1 to 8, **characterized in that** at least the filling and venting opening (15) of the master system (2) has an insertion portion (18) for tightly receiving the connecting piece (22) of the venting and filling tool (23) in a compensating container cover (17), **in that** the insertion portion (18) is adjoined in the insertion direction by a preferably cup-shaped connecting chamber (19) in the master housing (20), into which part of the connecting piece (22) protrudes and which has at least one connection to the compensating container.

10. Braking system according to claim 9, **characterized in that** the connecting chamber (19) has a lateral boundary wall (27) to the compensating container and **in that** in the boundary wall (27) at least one overflow opening which is open at the top edge is provided as a connection to the compensating container (14).

11. Braking system according to claim 9 or 10, **characterized in that** the connecting chamber (19) has clear inside dimensions which are larger than the part of the connecting piece (22) protruding thereinto and **in that** the overflow opening (21) open at the edge is arranged in the boundary wall (27) of the connecting chamber (19) in an area spaced apart from the highest point of the lateral boundary wall (27) in the operating position of the master system (2).

12. Braking system according to claim 10 or 11, **characterized in that** two preferably oppositely arranged, open-edged overflow openings (21) are provided in the boundary wall (27) of the connecting chamber (19).

13. Braking system according to any of claims 10 to 12, **characterized in that** the overflow opening(s) (21) arranged in the boundary wall (27) of the connecting chamber is (are) designed as a narrow edge slot and **in that** the slot width is dimensioned to retain air bubbles contained in the hydraulic fluid.

14. Braking system according to any of claims 1 to 13, **characterized in that** the sealing plug (35) has an insertion cavity accessible from the outside as a tool engagement point for the turning tool.

15. Braking system according to any of the preceding claims, **characterized in that** the insertion cavity of the sealing plug (35) is designed as a hexagon socket for a hexagon wrench as a turning tool.

16. Braking system according to any of the preceding claims, **characterized in that** the sealing plug (35) inserted into the filling and venting opening (15) is approximately flush with the opening of the insertion portion (18) or the cover.

17. Braking system according to any of the preceding claims, **characterized in that** the sealing plug (35) is made of a rigid plastic material.

18. Braking system according to any of the preceding claims, **characterized in that** the outer cone of the sealing plug (35) corresponds to a Luer cone.

19. Braking system according to any of the preceding claims, **characterized in that** the master system (2) is connected to a part of the two-wheeled vehicle, preferably the handlebar, by means of a mount (28), which is designed for adjusting the master system (2) at least into a filling and venting position and an operating position.

20. Braking system according to any of the preceding claims, **characterized in that** the filling and venting opening (15) has an insertion portion (18) arranged in a cover (17) of the compensating container (14) for tightly receiving the venting and filling tool (23), which is adjoined in the insertion direction by a connecting chamber (19) in the master housing (20), which has a lateral boundary wall (27) to the compensating container (14), and **in that** at least one overflow opening (21) to the compensating container (14) is provided in the boundary wall (27) or in a counterpart resting on the boundary wall.

21. Braking system according to claim 20, **characterized in that** the at least one overflow opening (21) from the connecting chamber (19) to the compensating container (14) is provided in the cover (17).

22. Braking system according to claim 20 or 21, **characterized in that** the at least one overflow opening (21a) from the connecting chamber (19) to the compensating container (14) is provided in a seal (31) between the cover (17) and the compensating container (14).

23. Braking system according to claim 22, **characterized in that** the overflow opening(s) (21a) provided in the seal (31) is formed as a groove which is open-edged in its region covering the boundary wall (27) and the opening of which faces the boundary wall.

24. Braking system according to claim 22 or 23, **characterized in that** the seal (31) is thickened at least in the support region on the boundary wall (27) of the connection chamber (19) where it has the at least one overflow opening (21a) open at the edge, in particular in the form of a groove.

25. Braking system according to any of claims 22 to 24, **characterized in that** the seal (31) with the at least one overflow opening (21a) is the circumferential side flange of the elastic bellows (30a).

## Revendications

1. Système de frein pour deux-roues, comprenant une installation de freinage hydraulique (1), un dispositif de remplissage pour l'installation de freinage, l'installation de freinage comprenant un système émetteur (2) rempli de liquide hydraulique et un dispositif de freinage (4) relié hydrauliquement à celui-ci, le système de freinage comprenant un récipient de compensation (14) et une ouverture de remplissage et de purge (16) qui est réalisée pour le raccordement amovible d'un outil de purge et de remplissage (23) pourvu d'un ensemble à piston et cylindre,
dans lequel
le récipient de compensation (14) et l'ouverture de remplissage et de purge (16) sont disposés sur le système émetteur (2), et l'ouverture de remplissage et de purge (16) est disposée du côté supérieur sur le système émetteur (2),
un bouchon d'obturation (35) est prévu pour obturer l'ouverture de remplissage et de purge (15),
**caractérisé en ce que**
l'ouverture de remplissage et de purge (15) présente une portion d'enfichage (18) ayant un cône de réception (25), et **en ce que** le bouchon d'obturation (35) présente un cône extérieur correspondant.

2. Système de frein selon la revendication 1,
**caractérisé en ce que**
l'ouverture de remplissage et de purge (15) du système émetteur (2) est disposée dans un couvercle (17) du récipient de compensation (14).

3. Système de frein selon la revendication 1 ou 2,
**caractérisé en ce que**
la liaison amovible entre l'outil de purge et de remplissage (23) et au moins l'ouverture de remplissage et de purge (15) du système émetteur (2) est formée par enfichage étanche.

4. Système de frein selon l'une des revendications 1 à 3,
**caractérisé en ce que**
le dispositif de freinage (4) présente une ouverture de remplissage et de purge (16) qui est réalisée pour permettre le raccordement amovible de l'outil de purge et de remplissage (23) et, de préférence, pour l'enfichage étanche.

5. Système de frein selon l'une des revendications 1 à 4,
**caractérisé en ce que**
l'outil de purge et de remplissage (23) est muni d'un manchon de raccordement (22) ou d'un élément de raccordement similaire pour l'enfichage étanche dans la ou les ouvertures de remplissage et de purge (15, 16).

6. Système de frein selon la revendication 5,
**caractérisé en ce que**
le manchon de raccordement (22) de l'outil de purge et de remplissage (23) comprend un cône Luer (24) ou un manchon dit Luer-lock, et **en ce que** l'ouverture de remplissage et de purge (15) du système émetteur (2) et, le cas échéant, l'ouverture de remplissage et de purge (16) du dispositif de freinage (4) sont réalisées pour correspondre au manchon de raccordement (22).

7. Système de frein selon l'une des revendications 1 à 6,
**caractérisé en ce que**
l'outil de purge et de remplissage (23) est une seringue habituelle du commerce.

8. Système de frein selon l'une des revendications 1 à 7,
**caractérisé en ce que**
l'outil de purge et de remplissage (23) est intégré dans le système émetteur (2).

9. Système de frein selon l'une des revendications 1 à 8,
**caractérisé en ce que**
au moins l'ouverture de remplissage et de purge (15) du système émetteur (2) présente, dans un couvercle (17) du récipient de compensation, une portion d'enfichage (18) pour recevoir de manière étanche le manchon de raccordement (22) de l'outil de purge et de remplissage (23), **en ce que** la portion d'enfichage (18) est suivie, dans la direction d'enfichage, par une chambre de raccordement (19) réalisée de préférence en forme de cuvette, dans le boîtier de l'émetteur (20), chambre dans laquelle pénètre une partie du manchon de raccordement (22) et qui présente au moins une liaison au récipient de compensation.

10. Système de frein selon la revendication 9,
**caractérisé en ce que**
la chambre de raccordement (19) comprend une paroi de délimitation latérale (27) vers le récipient de compensation, et **en ce que** au moins une ouverture de trop-plein à bord ouvert vers le haut est prévue à titre de liaison vers le récipient de compensation (14) dans la paroi de délimitation (27).

11. Système de frein selon la revendication 9 ou 10,
**caractérisé en ce que**
la chambre de raccordement (19) présente des dimensions intérieures libres supérieures à celles de la partie pénétrante du manchon de raccordement (22), et **en ce que**
l'ouverture de trop-plein (21) à bord ouvert dans la paroi de délimitation (27) de la chambre de raccordement (19) est disposée dans une zone espacée de l'emplacement le plus haut de la paroi de délimitation latérale (27), en position de fonctionnement du système émetteur (2).

12. Système de frein selon la revendication 10 ou 11,
**caractérisé en ce que**
deux ouvertures de trop-plein (21) à bord ouvert de préférence disposées à l'opposé l'une de l'autre sont prévues dans la paroi de délimitation (27) de la chambre de raccordement (19).

13. Système de frein selon l'une des revendications 10 à 12,
**caractérisé en ce que**
la ou les ouvertures de trop-plein (21) à bord ouvert disposées dans la paroi de délimitation (27) de la chambre de raccordement (19) est/sont réalisée(s) sous forme de fente de bord étroite, et **en ce que** la largeur de la fente est dimensionnée en vue de retenir des bulles d'air contenues dans le liquide hydraulique.

14. Système de frein selon l'une des revendications 1 à 13,
**caractérisé en ce que**
le bouchon d'obturation (35) présente une cavité d'enfichage accessible depuis l'extérieur à titre d'emplacement d'attaque d'outil pour un outil de rotation.

15. Système de frein selon l'une des revendications précédentes,
**caractérisé en ce que**
la cavité d'enfichage du bouchon d'obturation (35) est réalisée sous forme de six pans creux pour une clé à six pans à titre d'outil de rotation.

16. Système de frein selon l'une des revendications précédentes,
**caractérisé en ce que**
le bouchon d'obturation (35) enfiché dans l'ouverture de remplissage et de purge (15) se termine approximativement en affleurement avec l'ouverture de la portion d'enfichage (18) ou du couvercle.

17. Système de frein selon l'une des revendications précédentes,
**caractérisé en ce que**
le bouchon d'obturation (35) est constitué en matière plastique dure.

18. Système de frein selon l'une des revendications précédentes,
**caractérisé en ce que**
le cône extérieur du bouchon d'obturation (35) correspond à un cône Luer.

19. Système de frein selon l'une des revendications précédentes,
**caractérisé en ce que**
le système émetteur (2) est relié à une partie du deux-roues, de préférence au guidon, à l'aide d'une monture (28) qui est réalisée pour déplacer le système émetteur (2) au moins vers une position de remplissage et de purge et vers une position de fonctionnement.

20. Système de frein selon l'une des revendications précédentes,
**caractérisé en ce que**
l'ouverture de remplissage et de purge (15) comprend une portion d'enfichage (18) disposée dans un couvercle (17) du récipient de compensation (14) et destinée à recevoir de façon étanche l'outil de purge et de remplissage (23), portion à laquelle se raccorde en direction d'enfichage une chambre de raccordement (19) dans le boîtier de l'émetteur (20), laquelle comprend une paroi de délimitation latérale (27) vers le récipient de compensation (14), et **en ce que**
au moins une ouverture de trop-plein (21) vers le récipient de compensation (14) est prévue dans la paroi de délimitation (27) ou dans une pièce antagoniste reposant sur la paroi de délimitation.

21. Système de frein selon la revendication 20,
**caractérisé en ce que**
ladite au moins une ouverture de trop-plein (21) depuis la chambre de raccordement (19) vers le récipient de compensation (14) est prévue dans le couvercle (17).

22. Système de frein selon la revendication 20 ou 21,
**caractérisé en ce que**
ladite au moins une ouverture de trop-plein (21a) depuis la chambre de raccordement (19) vers le récipient de compensation (14) est prévue dans un joint d'étanchéité (31) entre le couvercle (17) et le récipient de compensation (14).

23. Système de frein selon la revendication 22,
**caractérisé en ce que**
la ou les ouvertures de trop-plein (21a) prévue(s) dans le joint d'étanchéité (31) est/sont ménagée(s) sous forme de gorge à bord ouvert dans sa/leur zone recouvrant la paroi de délimitation (27), gorge dont l'ouverture est dirigée vers la paroi de délimitation.

24. Système de frein selon la revendication 22 ou 23,
**caractérisé en ce que**
le joint d'étanchéité (31) est épaissi au moins dans la zone d'appui sur la paroi de délimitation (27) de la chambre de raccordement (19), et c'est à cet emplacement qu'il présente ladite au moins une ouverture de trop-plein (21a) à bord ouvert et en particulier en forme de gorge.

25. Système de frein selon l'une des revendications 22 à 24,
**caractérisé en ce que**
le joint d'étanchéité (31) présentant ladite au moins une ouverture de trop-plein (21a) est la bride latérale périphérique du soufflet élastique (30a).
